Europäisches Patentamt

European Patent Office

Office européen des brevets

(19)

(11) **EP 1 456 049 B1**

(12) **EUROPÄISCHE PATENTSCHRIFT**

(45) Veröffentlichungstag und Bekanntmachung des Hinweises auf die Patenterteilung:
**12.10.2005 Patentblatt 2005/41**

(21) Anmeldenummer: **02805244.7**

(22) Anmeldetag: **07.09.2002**

(51) Int Cl.$^7$: **B60K 6/04**

(86) Internationale Anmeldenummer:
**PCT/DE2002/003339**

(87) Internationale Veröffentlichungsnummer:
**WO 2003/053730 (03.07.2003 Gazette 2003/27)**

(54) **VERFAHREN UND EINRICHTUNG ZUR KOORDINIERTEN STEUERUNG MECHANISCHER, ELEKTRISCHER UND THERMISCHER LEISTUNGSFLÜSSE IN EINEM KRAFTFAHRZEUG**

METHOD AND DEVICE FOR THE COORDINATED CONTROL OF MECHANICAL, ELECTRICAL AND THERMAL POWER FLOWS IN A MOTOR VEHICLE

PROCEDE ET DISPOSITIF DE COMMANDE COORDONNEE DE FLUX DE PUISSANCE MECANIQUES ELECTRIQUES ET THERMIQUES DANS UN VEHICULE AUTOMOBILE

(84) Benannte Vertragsstaaten:
**DE ES FR GB IT**

(30) Priorität: **08.12.2001 DE 10160480**

(43) Veröffentlichungstag der Anmeldung:
**15.09.2004 Patentblatt 2004/38**

(73) Patentinhaber: **ROBERT BOSCH GMBH**
**70442 Stuttgart (DE)**

(72) Erfinder: **LOEFFLER, Juergen**
**71638 Ludwigsburg (DE)**

(56) Entgegenhaltungen:
**WO-A-01/56824          DE-A- 10 037 184**
**DE-A- 10 120 025        DE-A- 19 901 470**
**DE-A- 19 950 567**

**Beschreibung**

Die Erfindung betrifft ein Verfahren zur koordinierten Steuerung mechanischer, elektrischer und thermischer Leistungsflüsse in einem Kraftfahrzeug, so beispielsweise der Antriebsleistung an den Rädern, der Heckscheibenheizung und der Innenraumklimatisierung, zwecks Optimierung von Verbrauch, Komfort, Emissionen und dynamischem Fahrverhalten und damit zur Herbeiführung optimaler Betriebszustände der Aggregate des Kraftfahrzeuges, also der Speichersysteme, Wandler, Transformatoren und der Aggregate zur Dissipation von Energie, sowie eine Einrichtung zur Durchführung des Verfahrens zur kontinuierlichen Steuerung.

Stand der Technik

Zur Steuerung von Leistungsflüssen in einem Kraftfahrzeug ist eine Vielzahl von Verfahren und Einrichtungen zur Durchführung dieser Verfahren bekannt. So geht beispielsweise aus der DE 197 03 863 A1 ein derartiges Verfahren sowie eine Einrichtung hervor, durch die eine Antriebssteuerüng erfolgt, also mechanische Leistungsflüsse im Antrieb des Kraftfahrzeuges gesteuert werden - siehe auch Hötzer, D.: "Entwicklung einer Schaltstrategie für einen PKW mit automatischem Schaltgetriebe", expert verlag, Renningen, 1999. Unabhängig davon, wie diese Verfahren arbeiten, ist ihr Ziel immer eine Minimierung des Kraftstoffverbrauches und eine Optimierung des Fahrverhaltens, was durch koordinierte Steuerung des Verbrennungsmotors und des Fahrzeugantriebes erreicht werden kann.

Bekannt sind aber auch Systeme zur Steuerung thermischer Leistungsflüsse in einem Kraftfahrzeug, insbesondere Systeme zum Thermomanagement und zur Klimaregelung, und Systeme zur Steuerung elektrischer Leistungsflüsse im Bordnetz des Kraftfahrzeuges, wie Systeme zum elektrischen Energiemanagement und zum Verbrauchermanagement, wie beispielsweise aus dem Aufsatz von Schöttle, R. und Schramm, D., "Zukünftige Energiebordnetze im Kraftfahrzeug", Jahrbuch Fahrzeug- und Verkehrstechnik, VDI-Verlag, Düsseldorf, 1997 hervorgeht.

Die DE 199 38 623 A zeigt die Merkmale des Oberbegriffs des Ansprüches 1.

Allen bekannten Verfahren und Systemen ist jedoch gemeinsam, dass sie schwerpunktmäßig immer nur eine Energieform der mechanischen, elektrischen oder thermischen Leistungsflüsse in einem Kraftfahrzeug in Betracht ziehen und somit die in einem Kraftfahrzeug gegebene physikalische Kopplung zwischen diesen Energieformen im Wesentlichen nicht berücksichtigen.

Vorteile der Erfindung

Durch die Erfindung wird ein Verfahren sowie eine Einrichtung zur koordinierten Steuerung mechanischer, elektrischer und thermischer Leistungsflüsse in einem Kraftfahrzeug zur Optimierung von Verbrauch, Komfort, Emissionen und Fahrverhalten geschaffen, indem durch physikalische Kopplung der Speichersysteme für mechanische, elektrische, thermische und chemische Energie, der Wandler zur Wandlung der Energie zwischen diesen Energieformen, der Wandler zur Wandlung der Energie innerhalb einer der jeweiligen Energieform und der Aggregate zur Dissipation von Energie aller Energieformen alle in einem Kraftfahrzeug vorhandenen Energieformen berücksichtigt werden.

Diese Vorteile werden durch ein Verfahren erreicht, bei dem in einem Modul "Bestimmung optimaler Betriebszustand" ein optimaler Betriebszustand $x_{opt}$ für den Aggregateverbund ermittelt wird, das als Eingangsgrößen zumindest die Sollwerte erhält; die durch ein Modul "Generierung Sollgrößen" zur Verfügung gestellt werden, nachdem in diesem die von einem Modul "Erfassung Fahrerwunsch" ermittelten Größen zusammen mit weiteren Vorgabegrößen zusammengeführt worden sind, sowie den Ist-Betriebszustand x von einem Modul "Bestimmung Ist-Betriebszustand", nachdem in diesem die Messgrößen y zusammengefasst worden sind, die aus der Erfassung des Zustandes der Aggregate des Aggregateverbundes resultieren, und dass nach Ermittlung des optimalen Betriebszustandes $x_{opt}$ für den Aggregateverbund in einem Modul "Bestimmung Soll-Betriebszustand" der Soll-Betriebszustand $x_{soll}$ auf der Grundlage des Ist-Betriebszustandes x und des optimalen Betriebszustandes $x_{opt}$ ermittelt wird, so dass somit durch dieses Modul ein sanfter Übergang zwischen dem aktuellen Betriebszustand x und dem zu erreichenden Betriebszustand $x_{opt}$ erfolgt.

Dabei wird der Aggregateverbund durch einen Vektor von Stellgrößen u angesteuert, wobei jedes angesteuerte Aggregat über einen Eingang für Steuersignale verfügt. So steht ume für einen. Wandler von mechanischer nach elektrischer Energie. Die Ermittlung des Vektors von Stellgrößen u wird durch ein Modul "Ansteuerung Aggregateverbund" derart ermittelt, dass sich im Aggregateverbund der Betriebszustand $x_{soll}$ einstellt. Die eigentliche Steuerung der Aggregate des Aggregateverbundes kann jeweils von einer Steuereinheit - ME, EDC, Wechselrichtersteuerung - vorgenommen werden.

Während die Messgrößen y, durch die der Zustand der Aggregate des Aggregateverbundes erfasst wird, durch Sensoren direkt ermittelt werden oder aber von Aggregate-Steuereinheiten ermittelt werden können, wenn sie abgeleitete Größen umfassen, werden bei der Zusammenfassung der Messgrößen y und der Ermittlung des Ist-Betriebszustandes x des Aggregateverbundes in dem Modul "Bestimmung Ist-Betriebszustand" physikalische Rechenmodelle zur Beschreibung der Aggregate und damit des Aggregateverbundes herangezogen.

Bei der Durchführung des erfindungsgemäßen Verfahrens werden als weitere Vorgabegrößen dem Modul "Generierung Sollgrößen" durch Fahrer-Assistensyteme, so durch Fahrgeschwindigkeitsregler oder ACC, durch diese ermittelte Größen zugeführt. Da aber auch die in dem Modul "Erfassung Fahrerwunsch" erfassten Größen, die aus dem Wunsch nach einer Antriebleistung an den Rädern, dem Wunsch nach elektrischer Leistung, die das Bordnetz zum Betrieb elektrischer Verbraucher, wie beispielsweise Fahrlicht, Heckscheibenheizung und Radio, zur Verfügung stellen muss und dem Wunsch nach thermischer Leistung für die Innenraum-Klimatisierung resultieren, dem Modul "Generierung Sollgrößen" zugeführt werden, werden diese gemeinsam mit den durch die Fahrer-Assistenzsysteme ermittelten Größen in dem Modul "Generierung Sollgrößen" zusammengeführt. Durch dieses werden Sollgrößen für die mechanische Leistung $P_{m,soll}$, die elektrische Leistung $P_{e,soll}$ und für die thermische Leistung $P_{t,soll}$ ermittelt.

Zwecks Ermittlung eines optimalen Betriebszustandes $x_{opt}$ werden dem Modul "Bestimmung optimaler Betriebszustand" darüber hinaus aber auch mittels eines Parameter-Vektors a nach Erfassung durch ein weiteres Modul Informationen über den Fahrertyp, die Fahrsituation und über Umweltgrößen zur Verfügung gestellt.

Nach einem weiteren Merkmal der Erfindung werden zur Ermittlung des optimalen Betriebszustandes $x_{opt}$ im Modul "Bestimmung optimaler Betriebszustand" in Echtzeit während des Fahrbetriebes mehrere mögliche Betriebszustände $x_k$ bestimmt, so dass der Aggregateverbund die geforderte mechanische Leistung $P_{m,soll}$, die geforderte elektrische Leistung $P_{e,soll}$ und die geforderte thermische Leistung $P_{t,soll}$ bereitstellt. Dabei werden die Betriebszustände $x_k$, so gewählt, dass sie die physikalischen Kopplungen, die Grenzen der Speichersysteme und die Kapazität der Aggregate erfüllen, wobei für jeden Betriebszustand $x_k$ ein generalisierter Verbrauch V nach der Rechenvorschrift

$$V = \varepsilon_c * \nu_c\,(a) * dE_c/dt +$$

$$\varepsilon_m * \nu_m\,(a) * dE_m/dt +$$

$$\varepsilon_e * \nu_e\,(a) * dE_e/dt +$$

$$\varepsilon_t * \nu_t\,(a) * dE_t/dt$$

bestimmt wird.

Ebenso wird für jeden Betriebszustand $x_k$ der Wert einer Gütefunktion $\Gamma$ nach den Rechenvorschriften

$$G\,(x) = \gamma1(a) * G1(x) + \gamma2(a) * G2(x) +$$

$$\gamma3(a) * G3(x) + \gamma4(a) * G4(x) +$$

$$\gamma5(a) * G5(x) + \gamma6(a) * G6(x) +$$

$$\gamma7(a) * G7(x) + \gamma8(a) * D8(x)$$

und

$$\Gamma(x) = V(x) - G(x) + \Delta P(x)$$

bestimmt, wobei der Betriebszustand $x_k$, für den die Gütefunktion $\Gamma$ einen minimalen Wert annimmt, als der optimale Betriebszustand $x_{opt}$ bestimmt wird.

Zur Ermittlung des optimalen Betriebszustandes $X_{opt}$ im Modul "Bestimmung optimaler Betriebszustand" kann alternativ als zweite Variante aber auch ein Verfahrensschritt realisiert werden, gemäß dem in Offline-Optimierungsrechnungen für jede Fahrzeuggeschwindigkeit v und für jede geforderte Kombination aus geforderter mechanischer Leistung $P_{m,soll}$, geforderter elektrischer Leistung $P_{e,soll}$ und geforderter thermischer Leistung $P_{t,soll}$ der optimale Betriebszustand $X_{opt}$ ermittelt wird, der die Gütefunktion $\Gamma$ minimiert, wobei die Ermittlung für verschiedene Werte des Parameters a erfolgt. Der optimale Betriebszustand $x_{opt}$ wird in einem im Modul "Bestimmung optimaler Betriebszustand" implementierten, mehrdimensionalen Kennfeld abgelegt, das die Eingangsgrößen v, $P_{m,soll}$ $P_{e,soll}$, $P_{t,soll}$ und a besitzt; wobei die Ausgangsgröße der optimale Betriebszustand $x_{opt}$ ist.

Zur Durchführung des Verfahrens zur koordinierten Steuerung mechanischer, elektrischer und thermischer Leistungsflüsse in einem Kraftfahrzeug sieht die Erfindung weiterhin eine Einrichtung vor, bei der eine dem Verbrennungsmotor zugeordnete Motorsteuerung, eine der elektrischen Maschine zugeordnete Steuerung, vorzugsweise in Form eines Pulswechselrichters, und eine dem automatischen Getriebe zugeordnete Getriebesteuerung über einen CAN-Verbund mit einem Fahrzeugsteuergerät verbunden sind, in dem das erfindungsgemäße Verfahren umgesetzt ist, wobei durch das Fahrzeugsteuergerät die Stellung des Fahrzeugpedales und daraus der Wunsch des Fahrers nach einer mechanischen Leistung $P_{m,soll}$ für den Antrieb ableitbar ist. Dabei gibt das Fahrzeugsteuergerät der Motorsteuerung das Soll-Motormoment $M_{m,soll}$, dem Pulswechselrichter das Soll-Moment $M_{e,soll}$ der elektrischen Maschine und der Getriebesteuerung den Soll-Gang $g_{soll}$ vor. Außerdem ist bei dieser Einrichtung durch das Fahrzeugsteuergerät der elektrische Leistungsbedarf $P_{e,soll}$ der elektrischen Verbraucher, auch des an das elektrische Bordnetz angeschlossenen Pulswechselrichters sowie der Batterie erfassbar.

Vorteilhafte Ausgestaltungen der Erfindung ergeben sich aus den in den Unteransprüchen genannten Merkmalen.

Zeichnungen

Die Erfindung wird nachfolgend in einem Ausführungsbeispiel anhand der zugehörigen Zeichnungen näher erläutert. Es zeigen:

Figur 1   eine Systemskizze der in das Verfahren eingehenden Aggregate des Aggregateverbundes eines Kraftfahrzeuges sowie der physikalischen Vernetzung dieser Apparate;

Figur 2   ein schematisches Ablaufdiagramm eines Steuerungssystems, mit dem das Verfahren zur koordinierten Steuerung der Leistungsflüsse in einem Kraftfahrzeug verwirklicht wird;

Figur 3   ein Blockdiagramm der technischen Realisierung des Verfahrens für den Antriebsstrang eines Kraftfahrzeuges und

Figur 4   ein schematisches Ablaufdiagramm zur Bestimmung des optimalen Betriebszustandes in dem Modul "Bestimmung optimaler Betriebszustand" nach Figur 2.

Beschreibung des Ausführungsbeispieles

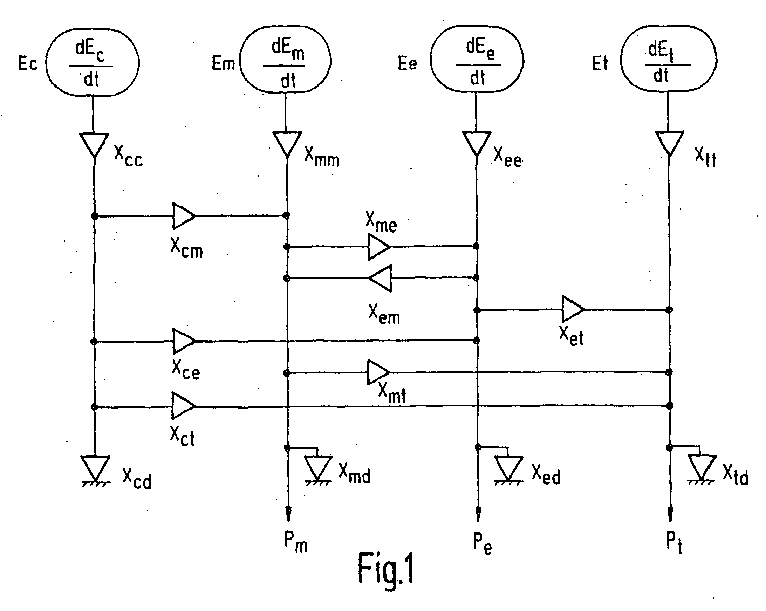

Der Aggregateverbund gemäß Figur 1 stellt eine mechanische Leistung $P_m$, eine elektrische Leistung $P_e$ und eine thermische Leistung $P_t$ bereit. Er verfügt über chemische, mechanische, elektrische und thermische Speicher, deren Energieinhalt jeweils abnehmen, zunehmen oder konstant bleiben kann. Der Energieinhalt des chemischen Speichers sei $E_c$, der des mechanischen Speichers $E_m$, der des elektrischen Speichers $E_e$ und der des thermischen Speichers $E_t$. Die Veränderungsrate des Energieinhalts des chemischen Speichers beträgt $dE_c/dt$, der des mechanischen Speichers $dE_m/dt$, der des elektrischen Speichers $dE_e/dt$ und der des thermischen Speichers $dE_t/dt$. Der Betriebszustand eines jeden Aggregates kann durch einen Vektor $x_i$ gekennzeichnet werden, dessen Elemente die Zustandsgrößen des Aggregates beschreiben, beispielsweise Drehzahl, Drehmoment, Temperatur, elektrischer Strom. So wird

-   der Betriebszustand eines Wandlers von chemischer nach mechanischer Energie, zum Beispiel eines Verbrennungsmotors, durch $x_{cm}$,

-   der Betriebszustand eines Wandlers von mechanischer nach elektrischer Energie, zum Beispiel eines Generators, durch $X_{me}$,

-   der Betriebszustand eines Wandlers von elektrischer nach mechanischer Energie, zum Beispiel eines elektrischen Antriebmotors, durch $x_{em}$,

-   der Betriebszustand eines Wandlers von elektrischer nach thermischer Energie, zum Beispiel eines elektrischen Heizgerätes, durch $x_{et}$,

-   der Betriebszustand eines Wandlers von chemischer nach elektrischer Energie, zum Beispiel einer Brennstoffzelle, durch $x_{ce}$,

-   der Betriebszustand eines Wandlers von mechanischer nach thermischer Energie, zum Beispiel eines Wellenlagers, das gekühlt werden muss, durch $x_{mt}$ und

-   der Betriebszustand eines Wandlers von chemischer nach thermischer Energie, zum Beispiel eines Standheizgerätes, durch $x_{ct}$

beschrieben.

Analog wird der Betriebszustand der Transformatoren beschrieben. So wird

-   der Betriebszustand eines chemischen Transformators, zum Beispiel eines Reformers von Methanol nach Wasserstoff, durch $X_{cc}$,

-   der Betriebszustand eines mechanischen Transformators, zum Beispiel eines automatischen Schaltgetriebes, durch $x_{mm}$,

-   der Betriebszustand eines elektrischen Transformators, zum Beispiel eines DC-Wandlers, durch $x_{ee}$ und

-   der Betriebszustand eines thermischen Transformators, zum Beispiel eines Wärmetauschers, durch $x_{tt}$

beschrieben.

Jedes der Aggregate, also die Speichersysteme, Wandler und Transformatoren, kann in dem Aggregateverbund mehrfach auftreten. Entsprechend sind weitere Betriebszustände $x_i$ zur Beschreibung heranzuziehen.

Ein Aggregat kann auch die Wandlung von mehreren Energieformen vornehmen. So wandelt ein Verbrennungsmotor chemische Energie in mechanische und in thermische Energie. Der Zustand eines solchen Aggregates wird ebenfalls durch einen Betriebszustand, wie zum Beispiel $x_{cmt}$, eindeutig beschrieben.

Der Aggregateverbund kann mehrere Ausgänge für mechanische, elektrische und/oder thermische Energie bereitstellen. So verfügt beispielsweise ein Aggregateverbund mit einem 19/42-V-Zweispannungsbordnetz sowohl über einen Ausgang für elektrische Verbraucher mit 14 V als auch über einen Ausgang für elektrische Verbraucher mit 42 V. Auch mehrere mechanische Ausgänge sind möglich, zum Beispiel bei Nutzfahrzeugen mit Nebenantrieben.

Die Menge der Betriebszustände $x_i$ der Aggregate und die Energieinhalte der Speichersysteme beschreiben den Gesamt-Betriebszustand x des Aggregateverbundes gemäß der Rechenvorschrift 1:

$$x = (E_c, E_m, E_e, E_t, x_{cm}, x_{ce}, x_{ct},$$

$$x_{cc}, x_{cd}, x_{me}, x_{mt}, x_{mm}, x_{md},$$

$$x_{em}, x_{et}, x_{ee}, x_{ed}, x_{tt}, x_{td}).$$

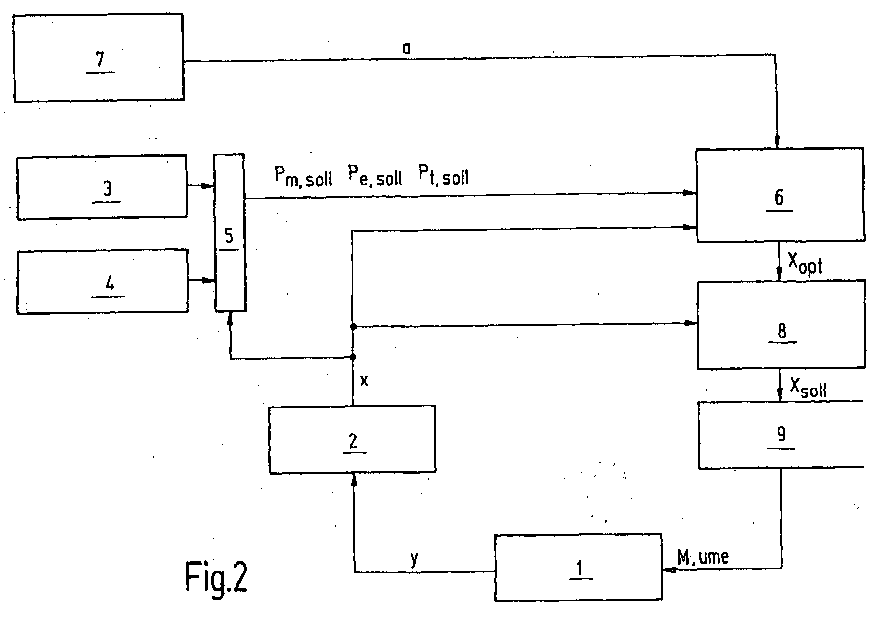

Bei dem Steuerungssystem zur koordinierten Steuerung der Leistungsflüsse und Zustände des Aggregateverbundes nach Figur 2 wird der Aggregateverbund 1 durch einen Vektor von Stellgrößen u angesteuert. Dabei verfügt jedes angesteuerte Aggregat einen Eingang für Steuersignale, beispielsweise ume für einen Wandler von mechanischer nach elektrischer Energie. Die eigentliche Steuerung des Aggregates kann dabei jeweils von einer Steuereinheit, zum Beispiel ME, EDC, Wechselrichter-Steuerung vorgenommen werden. Der Zustand der Aggregate des Aggregateverbundes 1 wird durch einen Vektor von Messgrößen y erfasst. Diese Messgrößen können von nicht weiter dargestellten Sensoren direkt ermittelt werden oder auch abgeleitete Größen umfassen, die von Aggregate-Steuereinheiten ermittelt werden. In einem Modul "Bestimmung Ist-Betriebszustand" 2 werden die Messgrößen y zusammengefasst und der Ist-Betriebszustand x des Aggregateverbundes 1 wird ermittelt. Dazu können physikalische Rechenmodelle zur Beschreibung der Aggregate und des Aggregateverbundes 1, zum Beispiel Beobachter, herangezogen werden.

In einem Modul "Erfassung Fahrerwunsch" 3 wird der Fahrerwunsch erfasst. Er umfasst insbesondere den Wunsch nach einer Antriebsleistung an den Rädern, den Wunsch nach elektrischer Leistung, die das Bordnetz zum Betrieb elektrischer Verbraucher, wie beispielsweise Fahrlicht, Heckscheibenheizung, Radio, zur Verfügung stellen muss, und den Wunsch nach einer thermischen Leistung für die Innenraum-Klimatisierung. Fahrer-Assistenzsysteme 4 können ebenfalls Vorgabegrößen generieren. Diese werden mit dem vom Modul "Erfassung Fahrerwunsch" 3 ermittelten Größen in einem Modul "Generierung Sollgrößen" 5 zusammengeführt. Dieses Modul ermittelt Sollgrößen für die mechanische Leistung $P_{m,soll}$, die elektrische Leistung $P_{e,soll}$ und die thermische Leistung $P_{t,soll}$. Jede dieser Sollgrößen kann mehrfach auftreten.

Den Kern des Steuerungssystems bildet das Modul "Bestimmung optimaler Betriebszustand" 6. Es ermittelt einen optimalen Betriebszustand $x_{opt}$ für den Aggregateverbund 1. Es erhält als Eingangsgrößen die Sollwerte vom Modul "Generierung Sollgrößen" 5 und den Ist-Betriebszustand x vom Modul "Bestimmung Ist-Betriebszustand" 2. Weiterhin werden Informationen über den Fahrertyp, die Fahrsituation und Umweltgrößen herangezogen, die ein Modul 7 mittels eines Parameter-Vektors a zur Verfügung stellt.

Ein Modul "Bestimmung Soll-Betriebszustand" 8 ermittelt den Soll-Betriebszustand $x_{soll}$ auf der Grundlage des Ist-Betriebszustandes x und des optimalen Betriebszustandes $x_{opt}$. Dieses Modul 8 stellt dabei sicher, dass ein sanfter Übergang zwischen dem aktuellen Betriebszustand x und dem im Ziel zu erreichenden optimalen Betriebszustand $x_{opt}$ erfolgt. Ein Modul "Ansteuerung Aggregateverbund" 9 ermittelt einen Vektor von Stellgrößen u derart, dass sich im Aggregateverbund 1 der Betriebszustand $x_{soll}$ einstellt.

Ausgehend davon, dass das erfindungsgemäße Verfahren Verbrauch, Komfort, Emissionen und dynamisches Fahrverhalten optimiert, wird dazu ein generalisierter Verbrauch V nach der Rechenvorschrift 2

$$V = \varepsilon_c * \nu_c(a) * dEc/dt +$$

$$\varepsilon_m * \nu_m (a) * dE_m/dt +$$

$$\varepsilon_e * \nu_e (a) * dE_e/dt +$$

$$\varepsilon_t * \nu_t (a) * dE_t/dt$$

bestimmt.

Dabei sind die Faktoren $\varepsilon_c$ Energie-Äquivalenzziffern, die den unterschiedlichen Grad der Nutzbarkeit der gespeicherten Energien beschreiben. So verfügt die im Speicher für mechanische Energie gespeicherte Energie eine höhere Energie-Äquivalenzziffer als die im Kraftstofftank gespeicherte chemische Energie. Die Werte der Energie-Äquivalenzziffern können während des Fahrbetriebes langfristig adaptiert werden.

Die Faktoren $\nu(a)$ sind Gewichtungsfaktoren, die die Änderungen des Energieinhalts der einzelnen Speicher gewichten. Ihre Werte werden in Abhängigkeit von einem Parameter-Vektor a ermittelt. Dieser Parameter-Vektor a beschreibt unter anderem den Fahrertyp (sportlich, ökonomisch), die Fahrsituationen (Kurve, Stadtfahrt) und Umweltgrößen (Steigung, Fahrbahnklasse, Temperatur). Umweltgrößen umfassen auch Informationen über den Verlauf, der vorausliegenden Fahrbahn und Informationen, die Telematic-Systeme zur Verfügung stellen können, insbesondere Krümmung der vorausliegenden Fahrbahn, Steigung der vorausliegenden Fahrbahn, Entfernung zur nächsten Kreuzung etc.

Für die Optimierung von dynamischem Fahrverhalten, Emissionen und Komfort werden generalisierte Gütemaße $G_i$ in Abhängigkeit vom Betriebszustand x des Aggregateverbundes 1 definiert:

- Ein Gütemaß G1(x) beschreibt die dynamische Leistungsreserve für mechanische Energie an einem Betriebszustand x. Die dynamische Leistungsreserve für mechanische Energie gibt an, welche zusätzliche mechanische Energie - über die am Betriebszustand x gelieferte mechanische Energie $P_{m(x)}$ hinaus - der Aggregateverbund 1 am Betriebszustand x mit hoher zeitlicher Dynamik zur Verfügung stellen kann. Die dynamische Leistungsreserve für mechanische Energie hängt bei einem Fahrzeugantrieb mit Elektromotor und Verbrennungsmotor beispielsweise von der maximalen Leistung des Verbrennungsmotors bei der Verbrennungsmotordrehzahl am Betriebszustand x, von der maximalen Leistung des Elektromotors bei der Elektromotordrehzahl am Betriebszustand x und dem Ladezustand der Batterie ab.

- Ein Gütemaß G2(x) beschreibt die dynamische Leistungsreserve für elektrische Energie an einem Betriebszustand x. Die dynamische Leistungsreserve für elektrische Energie gibt an, welche zusätzliche elektrische Energie - über die am Betriebszustand x gelieferte elektrische Energie $P_{e(x)}$ hinaus - der Aggregateverbund am Betriebszustand x mit hoher zeitlicher Dynamik zur Verfügung stellen kann.

- Ein Gütemaß G3(x) beschreibt die dynamische Leistungsreserve für thermische Energie an einem Betriebszustand x. Die dynamische Leistungsreserve für thermische Energie gibt an, welche zusätzliche thermische Energie - über die am Betriebszustand x gelieferte thermische Energie $p_{t(x)}$ hinaus - der Aggregateverbund 1 am Betriebszustand x mit hoher zeitlicher Dynamik zur Verfügung stellen kann.

- Ein Gütemaß G4(x) beschreibt die Emission von Luftschadstoffen (HC, CO, $NO_x$) an einem Betriebszustand x. Dabei werden große Werte für G4(x) für geringe Emissionen erreicht.

- Ein Gütemaß G5(x) beschreibt die Schallemission in die Fahrzeugumgebung an einem Betriebszustand x, wobei große Werte für G5(x) für geringe Schallemissionen erreicht werden.

- Ein Gütemaß. G6(x) beschreibt den Schwingungskomfort für die Fahrzeuginsassen an einem Betriebszustand x. Dabei entspricht ein großer Wert von G6(x) einem hohen Komfort.

- Ein Gütemaß G7(x) beschreibt die Schallemission in den Fahrzeuginnenraum an einem Betriebszustand x. Ein großer Wert von G7(x) entspricht hierbei einer geringen Schallemission.

- Ein Gütemaß G8(x) beschreibt den Verschleiß der Aggregate und Speicher an einem Betriebszustand x. Ein geringer Verschleiß, das heißt eine hohe Lebensdauer, wird durch große Werte G8(x) beschrieben.

Ein Gesamt-Gütemaß G(x) wird nach der Rechenvorschrift 3

$$G(x) - \gamma1(a) * G1(x) + \gamma2(a) * G2(x) +$$

$$\gamma3(a) * G3(x) + \gamma4(a) * G4(x) +$$

$$\gamma5(a) * G5(x) + \gamma6(a) * G6(x) +$$

$$\gamma7(a) * G7(x) + \gamma8(a) * G8(x)$$

bestimmt. Die Werte der Gewichtungsfaktoren $\gamma(a)$ werden in Abhängigkeit vom Parameter-Vektor a bestimmt.

Zur Optimierung von Verbrauch, Komfort, Emissionen und Fahrverhalten minimiert das erfindungsgemäße Verfahren eine Gütefunktion nach der Rechenvorschrift 4:

$$\Gamma(x) - V(x) - G(x) + \Delta P(x).$$

Dabei beschreibt die Leistungsabweichung $\Delta P(x)$ die Abweichung der von dem Aggregateverbund 1 gelieferten Leistungen von den Soll-Leistungen gemäß der Rechenvorschrift 5 wie folgt:

$$\Delta P(x) = \pi m(a) * (Pm,soll - Pm(x)) +$$

$$\pi e(a) * (Pe,soll - Pe(X)) +$$

$$\pi t(a) * (Pt,soll - Pt(x)).$$

Die Gewichtungsfaktoren $\pi m(a)$, $\pi e(a)$ und $\pi t$ (a) werden in Abhängigkeit vom Parameter-Vektor a festgelegt.

Zur Ermittlung des optimalen Betriebszustandes $x_{opt}$ im Modul "Bestimmung optimaler Betriebszustand" 6 können alternativ zwei verschiedene Verfahren realisiert werden:

1. Es werden in Echtzeit während des Fahrbetriebs mehrere mögliche Betriebszustände $x_k$ bestimmt, so dass der Aggregateverbund die geforderte mechanische Leistung $P_{m,soll}$, die geforderte elektrische Leistung $P_{e,soll}$ und die geforderte thermische Leistung $P_{t,soll}$ bereitstellt. Die Betriebszustände $x_k$ werden so gewählt, dass sie die physikalischen Kopplungen, Grenzen der Speichersysteme und Kapazität der Aggregate erfüllen. Für jeden Betriebszustand $x_k$ wird ein generalisierter Verbrauch V nach der Rechenvorschrift 2 bestimmt. Ebenso wird für jeden Betriebszustand $x_k$ nach den Rechenvorschriften 3 und 4 der Wert einer Gütefunktion $\Gamma$ bestimmt. Derjenige Betriebszustand, für den die Gütefunktion einen minimalen Wert annimmt, wird als der optimale Betriebszustand $x_{opt}$ be-

stimmt.

2. In Offline-Optimierungsrechnungen wird für jede Fahrzeuggeschwindigkeit v und für jede geforderte Kombination aus geforderter mechanischer Leistung $P_{m,soll}$, geforderter elektrischer Leistung $P_{e,soll}$ und geforderter thermischer Leistung $P_{t,soll}$ der optimale Betriebszustand $x_{opt}$ ermittelt, der die Gütefunktion $\Gamma$ minimiert. Die Ermittlung erfolgt für verschiedene Werte des Parameters a. Der optimale Betriebszustand $x_{opt}$ wird in einem mehrdimensionalen Kennfeld abgelegt, das die Eingangsgrößen v, $P_{m,soll}$, $P_{e,soll}$, $P_{t,soll}$ und a besitzt. Ausgangsgröße des mehrdimensionalen Kennfelds ist der optimale Betriebszustand $x_{opt}$. Das mehrdimensionale Kennfeld wird im Modul "Bestimmung optimaler Betriebszustand" 6 implementiert.

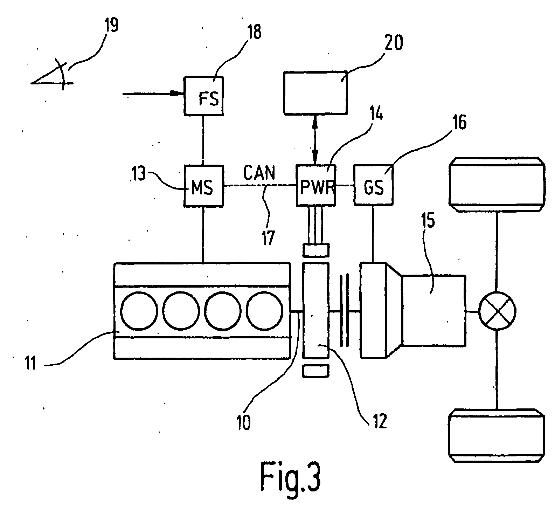

Die Realisierung des Verfahrens zur koordinierten Steuerung mechanischer, elektrischer und thermischer Leistungsflüsse in einem Kraftfahrzeug ist bezogen auf den Antriebsstrang des Kraftfahrzeuges mit einer auf der Kurbelwelle 10 des Verbrennungsmotors 11 angeordneten elektrischen Maschine 12, so eines Kurbelwellenstartgenerators, in Figur 3 beschrieben. Während der Verbrennungsmotor 11 durch die Motorsteuerung 13 gesteuert wird, erfolgt eine Steuerung der elektrischen Maschine 12 durch einen Pulswechselrichter 14. Das automatische Getriebe 15 wird durch die Getriebesteuerung 16 gesteuert. Sowohl diese als auch die Motorsteuerung 13 und der Pulswechselrichter 14 sind über einen CAN-Verbund 17 mit einem Fahrzeugsteuergerät 18 verbunden, in dem das erfindungsgemäße Verfahren umgesetzt wird. Das Fahrzeugsteuergerät 18 erfasst die Stellung des Fahrpedals 19 und leitet daraus den Wunsch nach einer mechanischen Leistung $P_{m,soll}$ des Fahrers für den Antrieb ab. Das Fahrzeugsteuergerät 18 gibt der Motorsteuerung 13 das Soll-Motormoment $M_{m,soll}$ und dem Pulswechselrichter 14 das Soll-Moment $M_{e,soll}$ der elektrischen Maschine 12 vor. Der Getriebesteuerung 16 wird der Soll-Gang $g_{soll}$ vorgegeben. Der Pulswechselrichter 14 ist an das elektrische Bordnetz angeschlossen, an das weiterhin die elektrischen Verbraucher und eine Batterie 20 angeschlossen sind. Das Fahrzeugsteuergerät 18 erfasst über an sich bekannte Einrichtungen den Bedarf der elektrischen Leistung $P_{e,soll}$ der elektrischen Verbraucher.

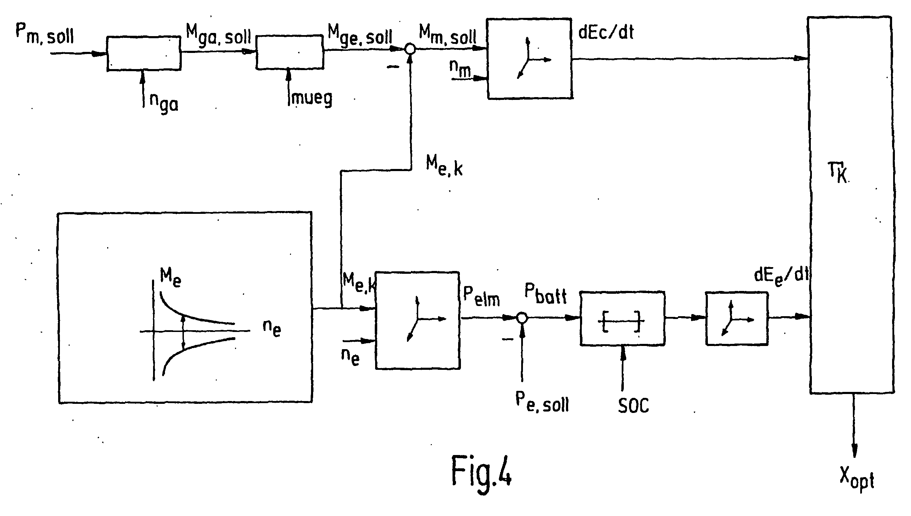

Die Bestimmung des optimalen Betriebszustandes $x_{opt}$ im Modul "Bestimmung optimaler Betriebszustand" 6 gemäß Figur 2 wird nachfolgend anhand des schematischen Ablaufdiagramms nach Figur 4 beschrieben.

Dabei wird aus der geforderten mechanischen Leistung $P_{m,soll}$ nach der Rechenvorschrift $M_{ga,soll} = P_{m,soll}/nga$ das Soll-Getriebeausgangsmoment $M_{ga,soll}$ bestimmt. Die Getriebe-Ausgangsdrehzahl ist nga. Das Soll-Getriebe-Eingangsmoment $M_{ge,soll}$ wird berechnet zu $M_{ge,soll} = m_{ga,soll}/mueg$, wobei mueg die Momentverstärkung des automatischen Getriebes 15 beim aktuell eingelegten Gang kennzeichnet.

Für den Antriebsstrang gemäß Figur 3 gilt nach der Rechenvorschrift 6 der Zusammenhang

$$M_{ge} = M_m + M_e,$$

wobei $M_m$ das effektive Motormoment und $M_e$ das Moment der elektrischen Maschine 12 beschreibt. Der Betriebszustand des Aggregateverbundes 1 wird durch die Rechenvorschrift 7

$$x = (M_m, M_e, g, nga)$$

gekennzeichnet, wobei g der eingelegte Getriebegang und nga die Getriebe-Ausgangsdrehzahl beschreibt. Die Motordrehzahl nm und die Drehzahl ne der elektrischen Maschine 12 sind gleich und sind durch den Gang g und die Getriebe-Ausgangsdrehzahl nga bestimmt.

Die möglichen Betriebszustände $x_k$ werden bestimmt, indem das Moment $M_e$ der elektrischen Maschine 12 innerhalb der Grenzen der Kennlinie für das minimale und maximale Moment in diskreten Schritten mit einer applizierbaren Schrittweite variiert wird.

Aus dem Moment $M_e$ und der Drehzahl ne der elektrischen Maschine 12 ergibt sich mittels eines Kennfeldes die elektrische Leistung $P_{elm}$ der elektrischen Maschine 12. Positive Momente (Maschine treibt an) führen zu einer elektrischen Leistungsaufnahme ($P_{elm} < 0$). Negative Momente (Maschine arbeitet im Generatorbetrieb) führen zu einer elektrischen Leistungsabgabe ($P_{elm} > 0$). Aus der geforderten elektrischen Leistung $P_{e,soll}$ und der von der elektrischen Maschine 12 aufgenommenen/abgegebenen Leistung errechnet sich die elektrische Leistungsabgabe der Batterie 20 nach der Rechenvorschrift 8 zu:

$$P_{batt} = P_{elm} - P_{e,soll}$$

Es werden im Weiteren nur die Betriebszustände $x_k$ weiter verfolgt, für die $P_{batt}$ in einem vorgegebenen Intervall liegt. Dieses Intervall kann abhängig vom Ladezustand SOC der Batterie 20 festgelegt werden.

Aus $P_{batt}$ wird mit einem Wirkungsgradkennfeld der Batterie 20 $dE_d/dt$ ermittelt.

Aus dem gemäß der Rechenvorschrift 9

$$M_{m,soll} = M_{ge,soll} - Me$$

sich ergebenden Soll-Motormoment und einem Verbrauchskennfeld des Verbrennungsmotors 11 wird $dE_c/dt$ ermittelt. Die Größen $dE_m/dt$ und $dE_t/dt$ werden in dem Anwendungsbeispiel zu Null gesetzt. Mittels der Rechenvorschriften 2, 3 und 4 wird derjenige Betriebszustand

$$x_k = ((M_{ge,soll} - M_{e,k}), (M_{e,k}), g, nga)$$

ausgewählt, für den $\Gamma$ ein Minimum einnimmt. Der Soll-Betriebszustand $x_{soll}$ wird gleich dem optimalen Betriebszustand $x_{opt}$ gesetzt. Die im Modul "Ansteuerung Aggregateverbund" 9 in Figur 2 ermittelten Steuergrößen für die Aggregate sind $M_{m,soll}$, $M_{e,soll}$ und $g_{soll}$.

Im beschriebenen Ablauf wird der Gang $g_{soll}$ nicht variiert, sondern es wird davon ausgegangen, dass der Gang von einem Rechenblock zur Getriebesteuerung vorgegeben wird. In einer..weiteren vorteilhaften Ausgestaltung kann jedoch der Soll-Gang durch das Optimierungsverfahren im Modul "Bestimmung optimaler Betriebszustand" 6 gemäß Figur 2 bestimmt werden. Dazu werden für den aktuellen Gang sowie für den nächstgrößeren und den nächstkleineren Gang die oben beschriebenen Rechenschritte durchgeführt. Es wird derjenige Gang als der optimale Gang ermittelt, für den die Gütefunktion $\Gamma$ ein Minimum annimmt.

**Patentansprüche**

1. Verfahren zur koordinierten Steuerung von Leistungsflüssen in einem Kraftfahrzeug, zur Herbeiführung optimaler Betriebszustände von Aggregaten des Kraftfahrzeugs, wobei in einem Modul "Bestimmung optimaler Betriebszustand" (6) ein optimaler Betriebszustand ($x_{opt}$) für den Aggregateverbund (1) ermittelt wird, das als Eingangsgrößen Sollwerte sowie den Ist-Betriebszustand (x) erhält, **dadurch gekennzeichnet, dass** mechanische, elektrische und thermische Leistungsflüsse koordiniert gesteuert werden, dass die Sollwerte zumindest die Sollwerte umfassen, die durch ein Modul "Generierung Sollgrößen" zur Verfügung gestellt werden, nachdem in diesem von einem Modul "Erfassung Fahrerwunsch" ermittelte Größen zusammen mit weiteren Vorgabegrößen zusammengeführt worden sind, dass der Ist-Betriebszustand (x) von einem Modul "Bestimmung Ist-Betriebszustand" zur Verfügung gestellt wird, nachdem in diesem die Messgrößen (y) zusammengefasst worden sind, die aus der Erfassung des Zustandes der Aggregate des Aggregateverbundes (1) resultieren, und dass nach der Ermittlung des optimalen Betriebszustandes ($x_{opt}$) für den Aggregateverbund (1) in einem Modul "Soll-Betriebszustand" (8) der Soll-Betriebszustand ($x_{soll}$) auf der Grundlage des Ist-Betriebszustandes (x) und des optimalen Betriebszustandes ($x_{opt}$) ermittelt wird, so dass somit durch dieses Modul ein sanfter Übergang zwischen dem aktuellen Betriebszustand (x) und dem zu erreichenden Betriebszustand ($x_{opt}$) erfolgt.

2. Verfahren nach Anspruch 1, **dadurch gekennzeichnet, dass** der Aggregateverbund (1) durch einen Vektor von Stellgrößen (u) angesteuert wird, wobei jedes angesteuerte Aggregat einen Eingang für Steuersignale verfügt, so (ume) für einen Wandler von mechanischer zu elektrischer Energie.

3. Verfahren nach Anspruch 2, **dadurch gekennzeichnet, dass** der Vektor von Stellgrößen (u) durch ein Modul "Ansteuerung Aggregateverbund" (9) derart ermittelt wird, dass sich im Aggregateverbund (1) der Betriebszustand ($x_{soll}$) einstellt.

4. Verfahren nach Anspruch 3, **dadurch gekennzeichnet, dass** die Steuerung der Aggregate des Aggregateverbundes (1) jeweils von einer Steuereinheit - ME, EDC, Wechselrichtersteuerung - erfolgt.

5. Verfahren nach Anspruch 4, **dadurch gekennzeichnet, dass** die Messgrößen (y), durch die der Zustand der Aggregate des Aggregateverbundes (19) erfasst wird, durch Sensoren direkt, oder wenn sie abgeleitete Größen umfassen, von Aggregate-Steuereinheiten ermittelt werden.

6. Verfahren nach Anspruch 5, **dadurch gekennzeichnet, dass** bei der Zusammenfassung der Messgrößen (y) und der Ermittlung des Ist-Betriebszustandes (x) des Aggregateverbundes (1) in dem Modul "Bestimmung Ist-Betriebszustand" (2) physikalische Rechenmodelle zur Beschreibung der Aggregate und damit des Aggregateverbundes (1) herangezogen werden.

7. Verfahren nach Anspruch 6, **dadurch gekennzeichnet, dass** als weitere Vorgabegrößen dem Modul "Generierung Sollgrößen" (5) durch Fahrer-Assistenzsysteme (4), so durch Fahrgeschwindigkeitsregler oder ACC, durch diese ermittelte Größen zugeführt werden.

8. Verfahren nach Anspruch 7, **dadurch gekennzeichnet, dass** in dem Modul "Erfassung Fahrerwunsch" (3) Größen erfasst werden, die aus dem. Wunsch nach einer Antriebsleistung an den Rädern, dem Wunsch nach elektrischer Leistung, die das Bordnetz zum Betrieb elektrischer Verbraucher zur Verfügung stellt, und dem Wunsch nach einer thermischen Leistung für die Innenraum-Klimatisierung resultieren.

9. Verfahren nach Anspruch 8, **dadurch gekennzeichnet, dass** durch das Modul "Generierung Sollgrößen" (5) Sollgrößen für die mechanische Leistung ($P_{m,soll}$), die elektrische Leistung ($P_{e,soll}$) und für die thermische Leistung ($P_{t,soll}$) ermittelt werden.

**10.** Verfahren nach Anspruch 9, **dadurch gekennzeichnet, dass** dem Modul "Bestimmung optimaler Betriebszustand" (6) mittels eines Parameter- Vektors (a) nach Erfassung durch ein weiteres Modul (7) Informationen über den Fahrertyp, die Fahrsituation und über Umweltgrößen zur Verfügung gestellt werden.

**11.** Verfahren nach Anspruch 1 bis 10, **dadurch gekennzeichnet, dass** zur Ermittlung des optimalen Betriebszustandes ($x_{opt}$) im Modul "Bestimmung optimaler Betriebszustand" (6) in Echtzeit während des Fahrbetriebes mehrere mögliche Betriebszustände ($x_k$) bestimmt werden, so dass der Aggregateverbund (1) die geforderte mechanische Leistung ($P_{m,soll}$), die geforderte elektrische Leistung ($P_{e,soll}$) und die geforderte thermische Leistung ($P_{t,soll}$) bereitstellt.

**12.** Verfahren nach Anspruch 11, **dadurch gekennzeichnet, dass** die Betriebszustände ($x_k$) so gewählt werden, dass sie die physikalischen Kopplungen, die Grenzen der Speichersysteme und die Kapazität der Aggregate erfüllen, wobei für jeden Betriebszustand ($x_k$) ein generalisierter Verbrauch (V) nach der Rechenvorschrift

$$V = \varepsilon_c * \nu_c \ (a) * dE_c/dt +$$
$$\varepsilon_m * \nu_m \ (a) * dE_m/dt +$$
$$\varepsilon_e * \nu_e \ (a) * dE_e/dt +$$
$$\varepsilon_t * \nu_t \ (a) * dE_t/dt$$

bestimmt wird.

**13.** Verfahren nach Anspruch 11, **dadurch gekennzeichnet, dass** für jeden Betriebszustand ($x_k$) der Wert einer Gütefunktion ($\Gamma$) nach den Rechenvorschriften

$$G(x) = \gamma1(a) * G1(x) + \gamma2(a) * G2(x) +$$
$$\gamma3(a) * G3(x) + \gamma4(a) * G4(x) +$$
$$\gamma5(a) * G5(x) + \gamma6(a) * G6(x) +$$
$$\gamma7(a) * G7(x) + \gamma8(a) * G8(x)$$

und

$$\Gamma(x) = V(x) - G(x) + \Delta P(x)$$

bestimmt wird, wobei der Betriebszustand ($x_k$), für

den die Gütefunktion ($\Gamma$) einen minimalen Wert annimmt, als der optimale Betriebszustand ($x_{opt}$) bestimmt wird.

**14.** Verfahren nach Anspruch 12 und 13, **dadurch gekennzeichnet, dass** in Offline-Optimierungsrechnungen für jede Fahrzeuggeschwindigkeit (v) und für jede geforderte Kombination aus geforderter mechanischer Leistung ($P_{m,soll}$), geforderter elektrischer Leistung ($P_{e,soll}$) und geforderter thermischer Leistung ($P_{t,soll}$) der optimale Betriebszustand ($x_{opt}$) ermittelt wird, der die Gütefunktion ($\Gamma$) minimiert, wobei die Ermittlung für verschiedene Werte des Parameters (a) erfolgt.

**15.** Verfahren nach Anspruch 14, **dadurch gekennzeichnet, dass** der optimale Betriebszustand ($x_{opt}$) in einem im Modul "Bestimmung optimaler Betriebszustand" (6) implementierten, mehrdimensionalen Kennfeld abgelegt wird, das die Eingangsgrößen (v), ($P_{m,soll}$, ($P_{e,soll}$), ($P_{t,soll}$) und (a) besitzt, wobei die Ausgangsgröße der optimale Betriebszustand ($x_{opt}$) ist.

**16.** Einrichtung zur Durchführung des Verfahrens zur koordinierten Steuerung mechanischer, elektrischer und thermischer Leistungsflüsse in einem Kraftfahrzeug nach Anspruch 1 bis 15, **dadurch gekennzeichnet, dass** eine dem Verbrennungsmotor (11) zugeordnete Motorsteuerung (13), eine der elektrischen Maschine (12) zugeordnete Steuerung, vorzugsweise in Form eines Pulswechselrichters (14), und eine dem automatischen Getriebe (15) zugeordnete Getriebesteuerung (16) über einen CAN-Verbund (17) mit einem Fahrzeugsteuergerät (18) verbunden sind, in dem das Verfahren umgesetzt ist, wobei durch das Fahrzeugsteuergerät (18) die Stellung des Fahrpedals (19) und daraus der Wunsch des Fahrers nach einer mechanischen Leistung ($P_{m,soll}$) für den Antrieb ableitbar ist.

**17.** Einrichtung nach Anspruch 16, **dadurch gekennzeichnet, dass** durch das Fahrzeugsteuergerät (19) der Motorsteuerung (13) das Soll-Motormoment ($M_{m,soll}$), dem Pulswechselrichter (14) das Soll-Moment ($M_{e,soll}$) der elektrischen Maschine 12 und der Getriebesteuerung (16) der Soll-Gang ($g_{soll}$) vorgegeben ist.

**18.** Einrichtung nach Anspruch 17, **dadurch gekennzeichnet, dass** durch das Fahrzeugsteuergerät (19) der elektrische Leistungsbedarf ($P_{e,soll}$) der elektrischen Verbraucher, auch des an das elektrische Bordnetz angeschlossenen Pulswechselrichters (14) sowie der Batterie (20) erfassbar ist.

**Claims**

1.  Method for coordinated control of power flows in a motor vehicle, for producing optimum operating states of equipment in the motor vehicle, with an optimum operating state ($x_{opt}$) for the equipment assembly (1) being determined in a "determination of the optimum operating state" (6) module, which receives as input variables nominal values as well as the actual operating state (x), **characterized in that** mechanical, electrical and thermal power flows are controlled in coordinated form, **in that** the nominal values comprise at least those nominal values which are made available by a "generation of nominal variables" module, once, therein, variables which are determined by a "detect driver demand" module have been collated with further preset variables, **in that** the actual operating state (x) is made available by a "determination of the actual operating state" module, once the measurement variables (y) have been collated in this module, which measurement variables (1) result from the detection of the state of the equipment in the equipment assembly (1), and **in that**, after the determination of the optimum operating state ($x_{opt}$) for the equipment assembly (1) in a "nominal operating state" module (8), the nominal operating state ($x_{nom}$) is determined on the basis of the actual operating state (x) and the optimum operating state ($x_{opt}$) so that this module thus provides a smooth transition between the current operating state (x) and the operating state ($x_{opt}$) to be achieved.

2.  Method according to Claim 1, **characterized in that** the equipment assembly (1) is driven by a vector of manipulated variables (u), with each driven equipment having an input for control signals, that is to say (ume) for a transducer from mechanical to electrical energy.

3.  Method according to Claim 2, **characterized in that** the vector of manipulated variables (u) is determined by a "drive equipment assembly" module (9) in such a way that the operating state ($x_{nom}$) is set in the equipment assembly (1).

4.  Method according to Claim 3, **characterized in that** the equipments in the equipment assembly (1) are each controlled by a control unit - ME, EDC, inverter controller.

5.  Method according to Claim 4, **characterized in that** the measurement variables (y) by means of which the state of the equipments in the equipment assembly (19) is detected are determined directly by sensors or, if they comprise derived variables, are determined by equipment control units.

6.  Method according to Claim 5, **characterized in that** the collation of the measurement variables (y) and the determination of the actual operating state (x) of the equipment assembly (1) in the "determination of the actual operating state" module (2) uses physical calculation models for description of the equipments and thus of the equipment assembly (1).

7.  Method according to Claim 6, **characterized in that**, as further preset variables, the "generation of nominal variables" module (5) is supplied by driver assistance systems (4), that is to say by a cruise control or ACC, with variables determined by them.

8.  Method according to Claim 7, **characterized in that** variables are detected in the "detection of the driver demand" module (3) which result from the demand for drive power to the wheels, the demand for electrical power which the vehicle power supply system makes available for operation of electrical loads, and the demand for thermal power for the interior climate control.

9.  Method according to Claim 8, **characterized in that** the "generation of nominal variables" module (5) determines nominal variables for the mechanical power ($P_{m,nom}$), the electrical power ($P_{e,nom}$) and for the thermal power ($P_{t,nom}$).

10. Method according to Claim 9, **characterized in that**, after detection by a further module (7), the "determination of the optimum operating state" module (6) is supplied by means of a parameter vector (a) with information about the driver type, the driving situation and about environmental variables.

11. Method according to Claims 1 to 10, **characterized in that**, in order to determine the optimum operating state ($x_{opt}$), a number of possible operating states ($x_k$) are determined in real time while driving in the "determination of the optimum operating state" module (6), so that the equipment assembly (1) provides the required mechanical power ($P_{m,nom}$), the required electrical power ($P_{e,nom}$) and the required thermal power ($P_{t,nom}$).

12. Method according to Claim 11, **characterized in that** the operating states ($x_k$) are chosen such that they satisfy the physical couplings, the limits of the storage systems and the capacity of the equipments, with a generalized consumption (V) being determined for each operating state ($x_k$) in accordance with the following calculation rule:

$$V = \varepsilon_c * \nu_c \, (a) * dE_c/dt +$$

$$\varepsilon_m * \nu_m \, (a) * dE_m/dt +$$

$$\varepsilon_e * \nu_e \,(a) * dE_e/dt +$$

$$\varepsilon_t * \nu_t \,(a) * dE_t/dt$$

**13.** Method according to Claim 11, **characterized in that** the value of a quality function ($\Gamma$) is determined for each operating state ($x_k$) using the following calculation rules:

$$G(x) = \gamma1(a) * G1(x) + \gamma2(a) * G2(x) +$$

$$\gamma3(a) * G3(x) + \gamma4(a) * G4(x) +$$

$$\gamma5(a) * G5(x) + \gamma6(a) * G6(x) +$$

$$\gamma7(a) * G7(x) + \gamma8(a) * G8(x)$$

and

$$\Gamma(x) - V(x) - G(x) + \Delta P(x)$$

with the operating state ($x_k$) for which the quality function ($\Gamma$) assumes a minimum value being determined as the optimum operating state ($x_{opt}$).

**14.** Method according to Claims 12 and 13, **characterized in that** the optimum operating state ($x_{opt}$) which minimizes the quality function ($\Gamma$) is determined in off-line optimization calculations for each vehicle speed (v) and for each required combination of the required mechanical power ($P_{m,mom}$), the required electrical power ($P_{e,nom}$) and the required thermal power ($P_{t,nom}$), with the determination process being carried out for various values of the parameter (a).

**15.** Method according to Claim 14, **characterized in that** the optimum operating state ($x_{opt}$) is stored in a multidimensional family of characteristics which is implemented in the "determination of the optimum operating state" module (6), which family of characteristics has the input variables (v), ($P_{m,nom}$), ($P_{e,nom}$), ($P_{t,nom}$) and (a), with the output variable being the optimum operating state ($x_{opt}$).

**16.** Device for carrying out the method for coordinated control of mechanical, electrical and thermal power flows in a motor vehicle according to Claims 1 to 15, **characterized in that** an engine controller (13) which is associated with the internal combustion engine (11), a controller which is associated with the electrical machine (12) and is preferably in the form of a pulse-controlled inverter (14), and a transmission controller (16) which is associated with the automatic transmission (15) are connected via a CAN assembly (17) to a vehicle controller (18) in which the method is implemented, in which case the vehicle controller (18) can derive the position of the accelerator pedal (19), and from this the driver demand for a mechanical power ($P_{m,nom}$) for the drive.

**17.** Device according to Claim 16, **characterized in that** the vehicle controller (19) predetermines the nominal engine torque ($M_{m,nom}$) for the engine controller (13), the nominal torque ($M_{e,nom}$) of the electrical machine (12) for the pulse-controlled inverter (14), and the nominal gear ($g_{nom}$) for the transmission controller (16).

**18.** Device according to Claim 17, **characterized in that** the vehicle controller (19) can detect the electrical power demand ($P_{e,nom}$) for the electrical loads, and for the pulse-controlled inverter (14) which is connected to the electrical vehicle power supply system, and for the battery (20).

## Revendications

**1.** Procédé de commande coordonnée des flux de puissance dans un véhicule automobile, pour des états optimaux de fonctionnement dans des groupes du véhicule automobile, selon lequel un état optimal de fonctionnement ($x_{opt}$) qui contient comme grandeurs d'entrée des valeurs de consigne et l'état de fonctionnement réel (x), est déterminé dans un module " détermination de l'état optimal de fonctionnement " (6), pour le combiné de groupes (1)
**caractérisé en ce que**
des flux de puissance mécaniques, électriques et thermiques sont commandés en coordination,
les valeurs de consigne comprennent au moins les valeurs de consigne qui sont fournies par un module " générer des grandeurs de consigne " après qu'y ont été acheminées des grandeurs déterminées par un module " enregistrer le souhait du conducteur " conjointement avec d'autres grandeurs de spécification,
l'état réel de fonctionnement (x) est fourni par un module " déterminer l'état réel de fonctionnement " après qu'y ont été rassemblées les grandeurs de mesure (y) qui résultent de l'enregistrement de l'état où se trouvent les groupes du combiné de groupes (1) et,
après que l'état optimal de fonctionnement ($x_{opt}$) a été déterminé pour le combiné de groupes (1), on détermine dans un module " état de fonctionnement de consigne " (8), un état de fonctionnement de consigne ($x_{opt}$) en se basant sur l'état de fonctionnement réel (x) et sur l'état optimal de fonctionnement ($x_{opt}$), de sorte que ce module permet de passer en douceur de l'état de fonctionnement (x) actuel à l'état de fonctionnement ($x_{opt}$) à atteindre.

2. Procédé selon la revendication 1,
**caractérisé en ce que**
le combiné de groupes (1) est commandé par un vecteur de grandeurs de réglage (u), chaque groupe commandé ayant une entrée pour des signaux de commande, à savoir (ume) pour un convertisseur qui transforme de l'énergie mécanique en énergie électrique.

3. Procédé selon la revendication 2,
**caractérisé en ce que**
le vecteur de grandeurs de réglage (u) est établi par un module " commander le combiné de groupes " (9) de telle manière que l'état de fonctionnement de consigne ($x_{soll}$) est réglé dans le combiné de groupes (1).

4. Procédé selon la revendication 3,
**caractérisé en ce que**
les groupes du combiné de groupes (1) sont respectivement commandés par une unité de commande (ME, EDC, commande d'onduleur).

5. Procédé selon la revendication 4,
**caractérisé en ce que**
les grandeurs de mesure (y) grâce auxquelles est enregistré l'état des groupes du combiné de groupes (19) sont déterminées directement par des capteurs ou, quand elles comprennent des grandeurs dérivées, par des unités de commande pour groupes.

6. Procédé selon la revendication 5.
**caractérisé en ce que**
lorsque les grandeurs de mesure (y) sont rassemblées et que l'état de fonctionnement réel (x) du combiné de groupes (1) est déterminé dans le module " détermination de l'état de fonctionnement réel " (2), on a recours à des modèles de calcul physiques pour décrire les groupes et donc le combiné de groupes (1).

7. Procédé selon la revendication 6.
**caractérisé en ce que**
des grandeurs déterminées par des systèmes d'assistance au conducteur (4), à savoir par un régulateur de vitesse de conduite ou ACC, sont acheminées en tant qu'autres grandeurs de spécification au module " générer des grandeurs de consigne " (5).

8. Procédé selon la revendication 7,
**caractérisé en ce que**
on enregistre dans le module " enregistrer le souhait du conducteur " (3) des grandeurs qui résultent d'une puissance d'entraînement souhaitée sur les roues, d'une puissance électrique souhaitée qui alimente le réseau de bord pour faire fonctionner des consommateurs électriques et d'une puissance thermique souhaitée destinée à la climatisation de l'habitacle.

9. Procédé selon la revendication 8,
**caractérisé en ce que**
des grandeurs de consigne pour la puissance mécanique ($P_{m,soll}$), pour la puissance électrique ($P_{e,soll}$) et pour la puissance thermique ($P_{t,soll}$) sont déterminées par le module " générer des grandeurs de consigne " (5).

10. Procédé selon la revendication 9,
**caractérisé en ce que**
des informations concernant le type de conducteur, la situation de conduite et des grandeurs de l'environnement sont fournies au module " déterminer l'état de fonctionnement optimal " (6) à l'aide d'un vecteur de paramètre (a) après l'enregistrement par un autre module (7).

11. Procédé selon les revendications 1 à 10,
**caractérisé en ce que**
plusieurs états de fonctionnement ($x_k$) possibles sont déterminés pour établir l'état optimal de fonctionnement ($x_{opt}$) dans le module " déterminer l'état optimal de fonctionnement " (6) en temps réel pendant la conduite, de sorte que le combiné de groupes (1) fournit la puissance mécanique ($P_{m,soll}$) demandée, la puissance électrique ($P_{e,soll}$) demandée et la puissance thermique ($P_{t,soll}$) demandée.

12. Procédé selon la revendication 11,
**caractérisé en ce que**
les états de fonctionnement ($x_k$) sont choisis de telle manière qu'ils satisfont aux couplages physiques, aux limites des systèmes de stockage et à la capacité des groupes, une consommation (V) généralisée étant déterminée pour chaque état de fonctionnement ($x_k$) d'après la règle de calcul :

$$V = \varepsilon_c * \nu_c(a) * dE_c/dt +$$
$$\varepsilon_m * \nu_m(a) * dE_m/dt +$$
$$\varepsilon_e * \nu_e(a) * dE_e/dt +$$
$$\varepsilon_t * \nu_t(a) * dE_t/dt$$

13. Procédé selon la revendication 11,
**caractérisé en ce que**
la valeur d'une fonction de qualité ($\Gamma$) est déterminée pour chaque état de fonctionnement ($x_k$) d'après la règle de calcul :

$$G(x) = \gamma1(a) * G1(x) + \gamma2(a) * G2(x) +$$

$$\gamma3(a) * G3(x) + \gamma4(a) * G4(x) +$$

$$\gamma5(a) * G5(x) + \gamma6(a) * G6(x) +$$

$$\gamma7(a) * G7(x) + \gamma8(a) * G8(x)$$

et

$$\Gamma(x) = V(x) - G(x) + \Delta P(x),$$

l'état de fonctionnement optimal ($x_{opt}$) déterminé étant l'état de fonctionnement ($x_k$) auquel la fonction de qualité ($\Gamma$) prend une valeur minimale.

**14.** Procédé selon les revendications 12 et 13, **caractérisé en ce que** l'état de fonctionnement optimal ($x_{opt}$) qui minimise la fonction de qualité ($\Gamma$) est déterminé dans des calculs d'optimisation hors ligne pour chaque vitesse (v) du véhicule et pour chaque combinaison demandée issue de la puissance mécanique ($P_{m,soll}$) demandée, de la puissance électrique ($P_{e,soll}$) demandée et de la puissance thermique ($P_{t,soll}$) demandée, et cette détermination se fait pour différentes valeurs du paramètre (a).

**15.** Procédé selon la revendication 14, **caractérisé en ce que** l'état de fonctionnement optimal ($x_{opt}$) est mémorisé dans un champ de caractéristiques multidimensionnel, implanté dans le module " détermination de l'état de fonctionnement optimal " (6) et muni des grandeurs d'entrée (v), ($P_{m,soll}$), ($P_{e,soll}$), ($P_{t,soll}$) et (a), la grandeur de sortie étant l'état de fonctionnement optimal ($x_{opt}$).

**16.** Installation pour exécuter le procédé de commande coordonnée des flux de puissance mécaniques, électriques et thermiques dans un véhicule automobile selon les revendications 1 à 15, **caractérisée en ce qu'** une commande de moteur (13) associée au moteur à combustion interne (11), une commande associée à la machine électrique (12), de préférence sous forme d'un onduleur à impulsions (14), et une commande de boîte de vitesses (16) associée à la boîte de vitesses (15) automatique sont reliées par l'intermédiaire d'un bus CAN (17) à un appareil de commande de véhicule (18) dans lequel le procédé est mis en oeuvre, l'appareil de commande de véhicule (18) pouvant dériver la position de la pédale d'accélération (19) et par conséquent une puissance mécanique ($P_{m,soll}$) souhaitée par le conducteur pour l'entraînement.

**17.** Installation selon la revendication 16, **caractérisée en ce que** l'appareil de commande de véhicule (18) spécifie à la commande de moteur (13) le couple moteur de consigne ($M_{m,soll}$), à l'onduleur à impulsions (14) le couple de consigne ($M_{e,soll}$) de la machine électrique (12), et à la commande de boîte de vitesses (16) le rapport de consigne ($g_{soll}$).

**18.** Installation selon la revendication 17, **caractérisée en ce que** l'appareil de commande de véhicule (18) saisit le besoin ($P_{e,soll}$) de puissance électrique des consommateurs électriques, également celle de l'onduleur à impulsions (14) raccordé au réseau électrique de bord ainsi que celle de la batterie (20).

Fig.1

Fig.2

Fig.3

Fig.4